# DEMANDE DE BREVET EUROPEEN

(11) **EP 0 933 959 A1**
(43) Date de publication de la demande: **04.08.1999**
(21) Numéro de dépôt: 98402907.4
(22) Date de dépôt: 23.11.1998
(51) Int. Cl.: H04Q 7/38

(54) **Procédé de coopération entre entités d'un réseau cellulaire de radiocommunications mobiles, lors de transferts de communications inter-cellulaires**

(30) Priorité: 27.11.1997 FR 9714912
(71) Demandeur: ALCATEL, 75008 Paris (FR)
(72) Inventeur: Roberts, Michael, 92200 Neuilly S/Seine (FR)
(74) Mandataire: El Manouni, Josiane

(57) **Abrégé**

Procédé de coopération entre entités d'un réseau cellulaire de radiocommunications mobiles, lors de transferts de communications inter-cellulaires, au cours desquels une cellule dite nouvelle cellule serveuse est choisie, parmi un ensemble de cellules dites cellules candidates, comme étant une cellule candidate vers laquelle un transfert demandé s'avère possible, des cellules candidates vers lesquelles un transfert demandé ne s'avère pas possible étant au contraire dites cellules rejetées, ce procédé étant essentiellement caractérisé en ce que, lors d'un transfert de communication dit externe, à savoir d'une cellule dite cellule serveuse actuelle (Ci) contrôlée par une entité de contrôle dite entité serveuse actuelle (BSCi), vers une nouvelle cellule serveuse (BSCj) contrôlée par une entité de contrôle distincte de ladite entité serveuse actuelle et dite nouvelle entité serveuse (BSCj), ladite nouvelle entité serveuse (BSCj) est informée de cellules précédemment rejetées (Ck).

## Description

La présente invention concerne d'une manière générale les systèmes cellulaires de radiocommunications mobiles, plus particulièrement la gestion des ressources radio dans ces systèmes, et plus particulièrement encore la gestion des ressources radio dans ces systèmes lors de transferts de communications inter-cellulaires (appelés aussi "handovers").

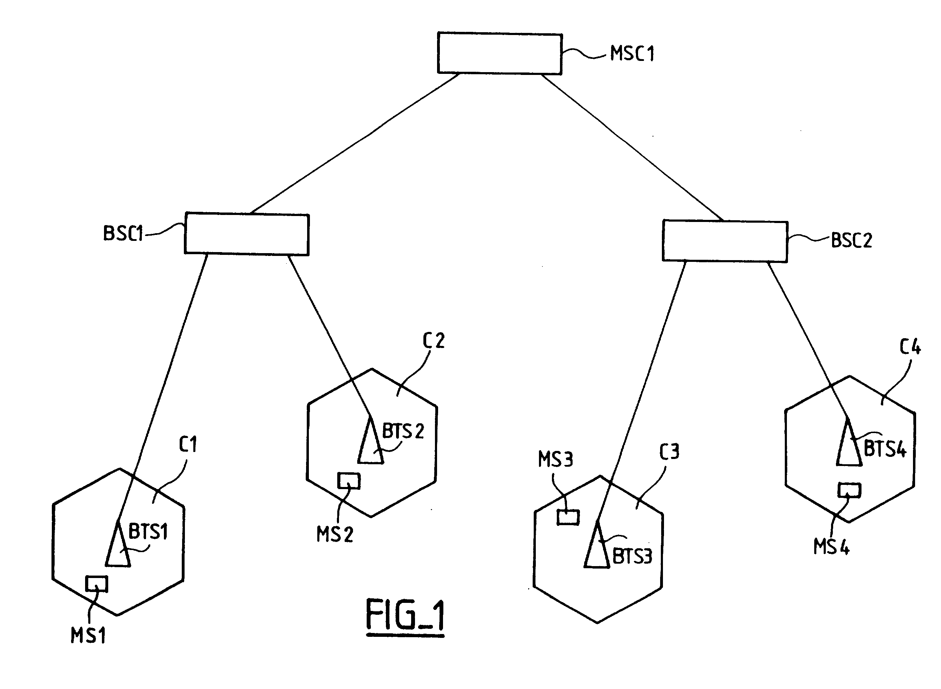

On rappelle, en relation avec la figure 1, l'architecture générale d'un système cellulaire de radiocommunications mobiles, tel que notamment le système GSM (pour "Global System for Mobile Communications"). Un tel système comporte essentiellement:
- un ensemble de stations de base, appelées aussi BTS (pour "Base Transceiver Station"), telles que celles notées BTS1, BTS2, BTS3 et BTS4, chacune de ces stations de base étant, dans l'exemple illustré, affectée à une cellule notée respectivement C1, C2, C3, et C4 (d'autres exemples étant bien entendu possibles, où une même BTS serait affectée à plusieurs cellules), et ces stations de base étant en relation avec des stations mobiles, telles que MS1, MS2, MS3, MS4, situées dans ces cellules,
- un ensemble de contrôleurs de stations de base, appelés aussi BSC (pour "Base Station Controller"), tels que ceux notés BSC1 et BSC2, chacun de ces BSC contrôlant, du point de vue de la gestion des ressources radio, un sous-ensemble de cellules, le contrôleur de stations de base BSC1 contrôlant dans l'exemple illustré les cellules C1 et C2, et le contrôleur de stations de base BSC2 contrôlant dans cet exemple les cellules C3 et C4,
- un ensemble de centres de commutation mobile, appelés aussi MSC ("pour Mobile Switching Center"), tels que celui noté MSC1, chacun de ces MSC étant en relation avec des réseaux extérieurs tels que notamment les réseaux PSTN (pour "Public Switched Telephone Network") ou ISDN (pour "Integrated Services Digital Network"), et contrôlant, du point de vue de la gestion des communications, un sous-ensemble de contrôleurs de stations de base, le centre de commutation mobile MSC1 contrôlant dans l'exemple illustré les contrôleurs de stations de base BSC1 et BSC2.

Dans un tel système, une décision d'effectuer un transfert de communication est prise par le réseau sur la base d'un certain nombre de paramètres, tels que notamment des résultats de mesures sur des signaux radio pour la cellule serveuse actuelle , et pour des cellules voisines de la cellule serveuse actuelle.

La cellule vers laquelle la communication est à transférer, dite nouvelle cellule serveuse, est plus précisément choisie, parmi un ensemble de cellules dites cellules candidates (déterminées par le réseau, parmi lesdites cellules voisines, sur la base desdits résultats de mesure), de la manière suivante.

Un transfert de communication est tout d'abord demandé vers la meilleure des cellules candidates. Dans le cas où un tel transfert s'avère possible, cette meilleure cellule candidate constitue la nouvelle cellule serveuse. Dans le cas où un tel transfert ne s'avère pas possible, un transfert est demandé vers la cellule candidate suivante, dans l'ordre de préférence de ces cellules candidates, et ainsi de suite.

Une cellule candidate vers laquelle un transfert est demandé est aussi appelée cellule cible.

Une cellule cible vers laquelle un transfert demandé ne s'avère pas possible est aussi dite cellule rejetée. Une cellule cible peut ainsi être rejetée notamment parce que la station mobile ne réussit pas à établir une liaison avec le réseau dans cette cellule, ou encore parce qu'aucune ressource radio n'est disponible dans cette cellule, du fait d'une surcharge de trafic, ou encore parce qu'une opération de contrôle ou de maintenance est en cours dans cette cellule, cette liste n'étant évidemmment pas limitative.

Dans le cas de cellule cible contrôlée par le même BSC que la cellule serveuse actuelle, ce qui correspond par exemple, sur la figure 1, à une demande de transfert de communication de la cellule C1 vers la cellule C2, ou de la cellule C3 vers la cellule C4 (un tel transfert étant aussi appelé transfert interne, ou transfert intra-BSC), le BSC concerné est en mesure de déterminer lui-même, de manière interne, si un transfert est ou non possible vers cette cellule cible, c'est-à-dire s'il s'agit ou non d'une cellule rejetée, puisque ce BSC gère les ressources radio pour ces deux cellules.

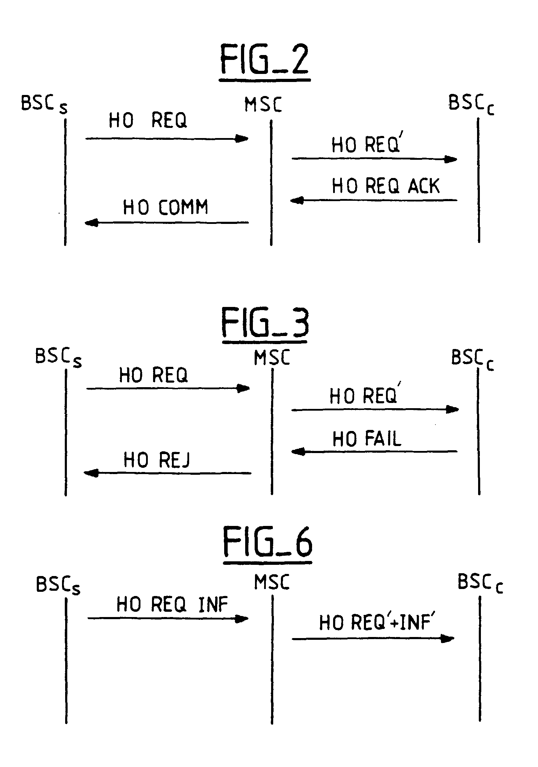

Dans le cas de cellule cible contrôlée par un BSC, dit BSC cible, autre que le BSC dit BSC serveur actuel (ou plus simplement dans ce qui suit BSC serveur) contrôlant la cellule serveuse actuelle (dite aussi plus simplement dans ce qui suit cellule serveuse), ce qui correspond par exemple, sur la figure 1, à une demande de transfert de communication de l'une ou l'autre des cellules C1 et C2 vers l'une ou l'autre des cellules C3 et C4, (un tel transfert étant aussi appelé transfert externe, ou transfert inter-BSC), le BSC serveur n'est pas en mesure de déterminer lui-même, de manière interne, si un transfert est ou non possible vers cette cellule cible, c'est-à-dire s'il s'agit ou non d'une cellule rejetée, et la procédure est alors celle rappelée sur l'une ou l'autre des figures 2 et 3, à savoir:
- le BSC serveur, noté BSCs, adresse tout d'abord au MSC un message de requête de "handover" (message noté ici HO REQ, pour "Handover Required"),
- le MSC adresse à son tour un message du même type (message noté ici HO REQ', pour "Handover Request") au BSC cible, noté BSCc,
- le BSC cible, après avoir déterminé de manière interne si un tel transfert est ou non possible vers cette cellule cible, c'est-à-dire s'il s'agit ou non d'une cellule rejetée, adresse au MSC, soit, dans le cas de cellule non rejetée (figure 2), un message d'accusé de réception de requête de "handover" (message noté ici HO REQ ACK, pour "Handover Request Acknowledgement") contenant lui-même un message de commande de transfert, soit, dans le cas de cellule rejetée (figure 3), un message indiquant une impossibilité d'effectuer un transfert vers cette cellule cible (message noté ici HO FAIL, pour "Handover Failure"),
- le MSC adresse à son tour au BSC serveur un message de même nature, à savoir soit un message de commande de transfert (message noté ici HO COMM, pour "Handover Command"), soit un message indiquant une impossibilité d'effectuer un transfert vers cette cellule cible (message noté ici HO REJ, pour "Handover Required Reject").

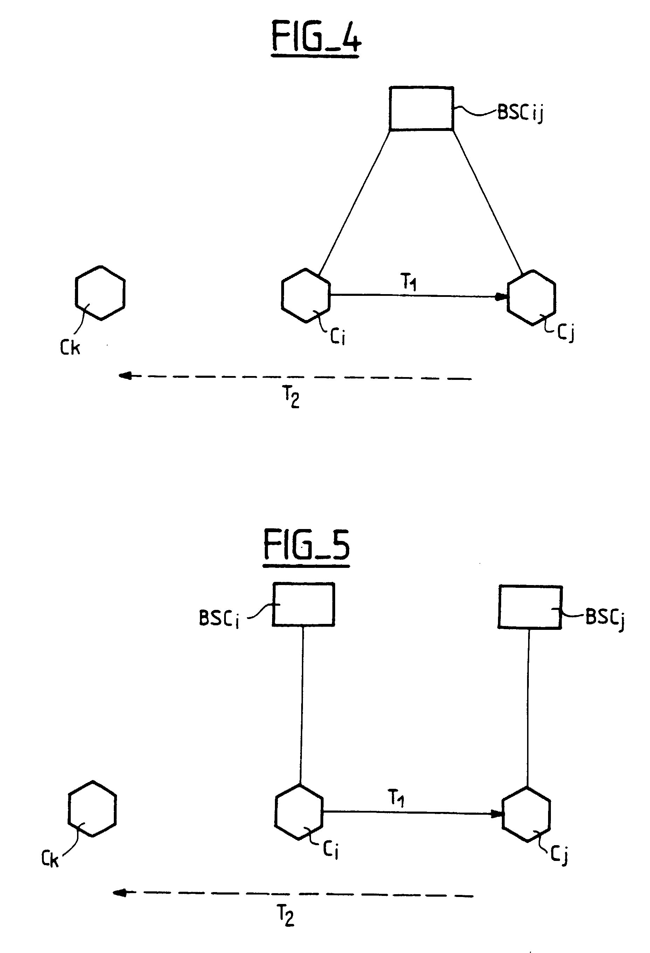

Comme illustré sur les figures 4 et 5, une fois qu'un transfert T1 d'une cellule Ci vers une cellule Cj a été effectivement réalisé, il se peut qu'un transfert T2 soit ensuite demandé vers une cellule Ck précédemment rejetée à l'occasion du transfert T1. En effet, si la cellule Ck a été précédemment rejetée, cela signifie qu'un transfert a été précédemment demandé vers cette cellule et donc qu'elle faisait très probablement partie des meilleures cellules candidates, et il est donc normal, notamment si la demande de transfert T2 est proche dans le temps du transfert T1, qu'elle réapparaisse parmi les meilleures cellules candidates pour le transfert T2, et donc qu'un transfert soit de nouveau demandé vers cette cellule.

Dans le cas, illustré sur la figure 4, où les cellules Ci et Cj sont contrôlées par le même BSC, noté BSCij, celui-ci a connaissance du fait que la cellule Ck a été rejetée lors du transfert T1, et est donc en mesure de décider qu'un tel transfert T2 ne doit, temporairement, pas être demandé vers la cellule Ck.

Dans le cas, illustré sur la figure 5, où les cellules Ci et Cj ne sont pas contrôlées par le même BSC, le BSC serveur actuel, noté BSCj, n'a pas connaissance du fait que la cellule Ck a été rejetée lors du transfert T1 (puisque seul le BSC serveur initial, noté BSCi, a une telle connaissance), et n'est donc pas en mesure de décider qu'un tel transfert T2 ne doit, temporairement, pas être demandé vers la cellule Ck.

Dans ce cas:
- si les cellules Cj et Ck ne sont pas contrôlées par le même BSC, le BSC serveur actuel BSCj adresse, suivant la procédure rappelée plus haut en relation avec les figures 2 et 3, une demande de transfert au BSC cible (non représenté) contrôlant la cellule Ck, et risque alors de recevoir de ce BSC cible un message indiquant une impossibilité d'effectuer un transfert vers la cellule Ck. Une demande de transfert aura alors été faite inutilement, d'où un allongement inutile du temps de transfert de la communication et une consommation inutile de ressources de transmission pour les échanges de messages de signalisation correspondants, et donc une dégradation de la qualité de service,
- si les cellules Cj et Ck sont contrôlées par le même BSC, le BSC serveur actuel BSCj risque de devoir déterminer inutilement, de manière interne, si un transfert vers la cellule Ck est possible, d'où un allongement inutile du temps de transfert de la communication, et donc également une dégradation de la qualité de service.

La présente invention vise notamment à éviter ces inconvénients, c'est-à-dire à optimiser le fonctionnement du réseau en pareil cas, et plus généralement à améliorer la coopération entre entités du réseau dans le cas de transferts de communications inter-cellulaires.

La présente invention a ainsi pour objet un procédé de coopération entre entités d'un réseau cellulaire de radiocommunications mobiles, lors de transferts de communications inter-cellulaires, au cours desquels une cellule dite nouvelle cellule serveuse est choisie, parmi un ensemble de cellules dites cellules candidates, comme étant une cellule candidate vers laquelle un transfert demandé s'avère possible, des cellules candidates vers lesquelles un transfert demandé ne s'avère pas possible étant au contraire dites cellules rejetées, ce procédé étant essentiellement caractérisé en ce que, lors d'un transfert de communication dit externe, à savoir d'une cellule dite cellule serveuse actuelle contrôlée par une entité de contrôle dite entité serveuse actuelle, vers une nouvelle cellule serveuse, contrôlée par une entité de contrôle distincte de ladite entité serveuse actuelle et dite nouvelle entité serveuse, ladite nouvelle entité serveuse est informée de cellules précédemment rejetées.

Ainsi la nouvelle entité serveuse, informée de ces cellules précédemment rejetées, ne tente pas inutilement de demandes de transfert vers des cellules précédemment rejetées, et les inconvénients mentionnés plus haut sont évités.

Suivant une autre caractéristique, ladite information quant à des cellules précédemment rejetées comporte en outre une indication quant à la raison du rejet de ces cellules, ou quant à la durée au bout de laquelle un transfert peut, le cas échéant, de nouveau être demandé vers ces cellules.

Ainsi la nouvelle entité serveuse est en mesure de déterminer le moment où un transfert peut, le cas échéant, de nouveau être demandé vers ces cellules précédemment rejetées, ce qui permet d'optimiser encore le fonctionnement du réseau.

Un autre objet de la présente invention consiste en une entité de contrôle de cellules pour réseau cellulaire de radiocommunications mobiles, notamment BSC pour un réseau tel qu'un réseau du type GSM, pour la mise en oeuvre d'un tel procédé.

D'autres objets et caractéristiques de la présente invention apparaîtront à la lecture de la description suivante d'un exemple de réalisation, faite en relation avec les dessins ci-annexés dans lesquels:
- la figure 1 rappelle schématiquement l'organisation d'un réseau de radiocommunications mobiles tel que notamment le réseau GSM,
- la figure 2 est un diagramme rappelant les différents messages échangés entre différentes entités d'un tel réseau lors d'une demande de transfert externe, dans le cas où un tel transfert s'avère possible,
- la figure 3 est un diagramme rappelant les différents messages échangés entre différentes entités d'un tel réseau lors d'une demande de transfert externe, dans le cas où un tel transfert ne s'avère pas possible,
- les figures 4 et 5 sont des schémas destinés à illustrer le problème résolu par la présente invention,

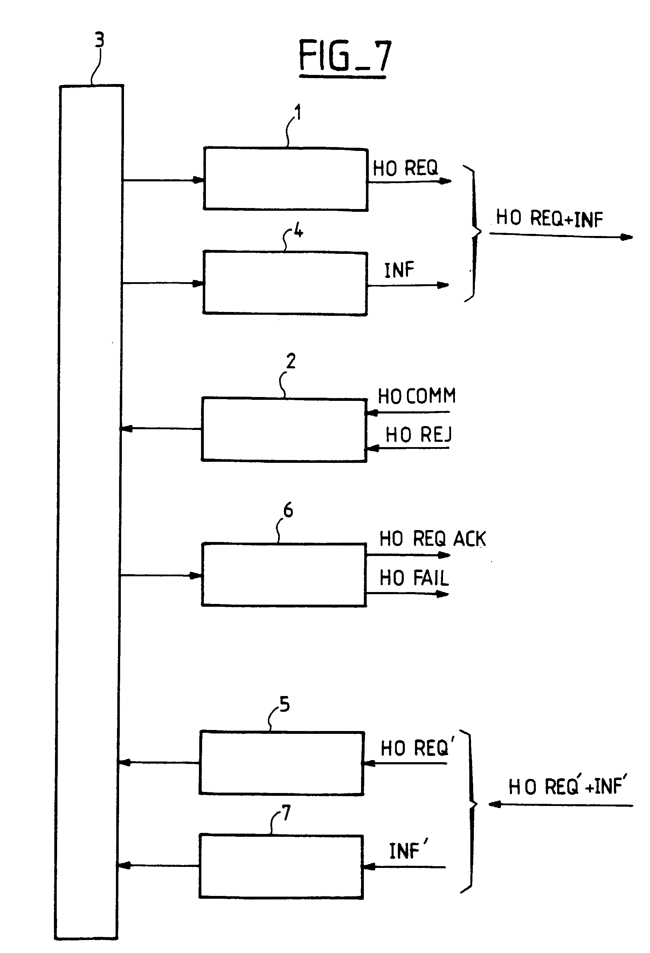

- la figure 6 est un diagramme destiné à illustrer un exemple de procédé de coopération suivant l'invention,
- la figure 7 illustre de manière schématique un exemple de moyens à mettre en oeuvre selon l'invention dans une entité de contrôle de cellules pour réseau cellulaire de radiocommunications mobiles (notamment BSC pour un réseau du type GSM).

La présente invention concerne donc un procédé de coopération entre entités d'un réseau cellulaire de radiocommunications mobiles, lors de transferts de communications inter-cellulaires, au cours desquels une cellule dite nouvelle cellule serveuse, est choisie, parmi un ensemble de cellules dites cellules candidates, comme étant une cellule candidate vers laquelle un transfert demandé s'avère possible, des cellules candidates vers lesquelles un transfert demandé ne s'avère pas possible étant au contraire dites cellules rejetées.

Suivant l'invention, pour améliorer la coopération entre entités du réseau, lors d'un transfert de communication dit externe, à savoir d'une cellule dite cellule serveuse actuelle (telle que la cellule Ci illustrée sur la figure 5) contrôlée par une entité de contrôle dite entité serveuse actuelle (telle que l'entité BSCi illustrée sur la figure 5), vers une nouvelle cellule serveuse (telle que la cellule Cj illustrée sur la figure 5) contrôlée par une entité de contrôle distincte de ladite entité serveuse actuelle et dite nouvelle entité serveuse (telle que l'entité BSCj illustrée sur la figure 5), ladite nouvelle entité serveuse est informée de cellules précédemment rejetées (telles que la cellule Ck illustrée sur la figure 5).

Pour cela, dans l'exemple de réalisation décrit en relation avec les figures 6 et 7, une cellule candidate vers laquelle un transfert est demandé étant dite cellule cible, l'entité de contrôle BSCc d'une cellule cible étant dite entité cible, et chaque entité cible étant susceptible de devenir la nouvelle entité serveuse si le transfert demandé vers cette cellule cible s'avère possible, chaque entité cible est informée, au cours d'une demande de transfert vers cette cellule cible, de cellules précédemment rejetées.

En outre, dans l'exemple de réalisation décrit en relation avec les figures 6 et 7, l'information de l'entité cible BSCc quant à des cellules précédemment rejetées est assurée par l'entité serveuse BSCs.

En outre, dans l'exemple de réalisation décrit en relation avec les figures 6 et 7, ladite information quant à des cellules précédemment rejetées est transmise de l'entité serveuse BSCs à l'entité cible BSCc, via l'entité MSC (ou entité de niveau supérieur), assurant la liaison entre cette entité serveuse et cette entité cible.

Ainsi, sur le diagramme de la figure 6, une telle information quant à des cellules précédemment rejetées, notée INF, est associée au message HO REQ transmis au MSC par le BSC serveur BSCs suivant la procédure rappelée plus haut en relation avec les figures 2 et 3.

De même, cette information est retransmise par le MSC au BSC cible BSCc, étant alors notée INF' et étant également, dans l'exemple illustré, associée au message correspondant HO REQ' retransmis par le MSC au BSC cible BSCc.

Il serait aussi possible, suivant un autre exemple de réalisation, non illustré spécifiquement, que chaque entité cible soit informée de cellules précédemment rejetées, non par l'entité serveuse actuelle mais par l'entité MSC. Un tel exemple de réalisation correspond notamment au cas où l'entité serveuse actuelle transmet au MSC la liste des cellules candidates, et où le MSC effectue lui-même successivement les demandes de transfert correspondantes.

Avantageusement, ladite information comporte elle-même une indication quant à la raison du rejet desdites cellules, ou quant à une durée au bout de laquelle un transfert peut, le cas échéant, de nouveau être demandé vers ces cellules.

On notera par ailleurs que les cellules précédemment rejetées peuvent être non seulement des cellules rejetées à l'occasion du transfert en cours, mais aussi des cellules rejetées à l'occasion de précédents transferts, qu'il s'agisse de transferts internes ou de transferts externes.

La figure 7 illustre de manière schématique le type de moyens à mettre en oeuvre selon un exemple de réalisation de l'invention, dans une entité de contrôle de cellules pour réseau cellulaire de radiocommunications mobiles, notamment dans l'entité appelée BSC pour un réseau de type GSM.

De manière connue, et par conséquent non redécrite ici dans le détail, une telle entité BSC comporte, pour le cas de cellule contrôlée constituée par une cellule serveuse, des moyens 1 d'émission de message de demande de transfert vers une cellule cible (message HO REQ), et des moyens 2 de réception de messages obtenus en réponse à une telle demande (messages HO COMM, HO REJ), ces moyens 1 et 2 fonctionnant de manière connue en liaison avec des moyens 3 de gestion de ressources radio.

Suivant l'exemple illustré, cette entité BSC comporte en outre, pour le cas de cellule contrôlée constituée par une cellule serveuse, des moyens 4 pour émettre une information INF quant à des cellules précédemment rejetées. Dans l'exemple illustré, l'information INF est transmise associée au message HO REQ de demande de transfert.

Les moyens 4 reçoivent pour cela une information, fournie par les moyens 3 de gestion de ressources radio, quant à la liste des cellules rejetées à l'occasion d'un transfert en cours, et mettent l'information ainsi reçue dans une forme appropriée pour sa transmission vers l'entité MSC, de manière à constituer l'information INF.

Eventuellement, des cellules rejetées à l'occasion de précédents transferts, qu'il s'agisse de transferts externes ou de transferts internes, peuvent être ajoutées à cette liste, d'une manière qui sera vue ultérieurement.

En outre, l'information INF peut elle-même comporter une indication quant à la raison du rejet des cellules considérées, ou quant à une durée au bout de laquelle un transfert peut, le cas échéant, de nouveau être demandé vers ces cellules. Comme rappelé plus haut, une cellule peut être rejetée par exemple en raison d'une impossibilité pour la station mobile d'établir une liaison avec le réseau dans ces cellules, ou en raison d'une surcharge de trafic dans ces cellules, ou encore en raison d'une opération de contrôle ou de maintenance en cours dans ces cellules, ces exemples n'étant évidemment pas limitatifs.

Egalement de manière connue, et par conséquent non redécrite ici dans le détail, une telle entité BSC comporte, pour le cas de cellule contrôlée constituée par une cellule cible, des moyens 5 de réception de messages de demande de transfert (messages HO REQ'), et des moyens 6 d'émission, soit de message d'accusé de réception de requête de "handover" (message HO REQ ACK), soit de message indiquant une impossibilité d'effectuer un transfert vers cette cellule cible (message HO FAIL), ces moyens 5 et 6 fonctionnant, également de manière connue, en liaison avec les moyens 3 de gestion de ressources radio.

Suivant l'exemple illustré, cette entité BSC comporte en outre, pour le cas de cellule contrôlée constituée par une cellule cible, des moyens 7 pour recevoir une information telle que INF' quant à des cellules précédemment rejetées. Dans l'exemple illustré, cette information INF' est reçue associée au message HO REQ' de demande de transfert.

Les moyens 3 de gestion de ressources radio sont commandés par les moyens 7, de manière à interdire, dans le cas de cellule contrôlée constituée par une cellule successivement cible et serveuse, l'émission, par les moyens 1, de demandes de transfert vers de telles cellules précédemment rejetées.

En outre, dans le cas où l'information INF' comporte une indication relative à la raison du rejet des cellules considérées, ou à une durée au bout de laquelle un transfert peut, le cas échéant, de nouveau être demandé vers ces cellules, les moyens 3 de gestion de ressources radio sont en outre commandés par les moyens 7 pour autoriser l'émission de demandes de transfert vers ces cellules au bout d'une telle durée ou au bout d'une durée, par exemple prédéterminée, fonction de ladite raison.

Dans le cas de cellules rejetées pouvant être non seulement des cellules rejetées à l'occasion du transfert en cours, mais aussi des cellules rejetées à l'occasion de précédents transferts, la liste de telles cellules rejetées lors de précédents transferts, obtenue par les moyens 7 à partir de l'information INF' correspondante, est rajoutée par les moyens 3 de gestion de ressources radio à la liste des cellules rejetées à l'occasion du transfert en cours.

Les moyens 1 d'émission de messages de demande de transfert (messages REQ) et les moyens 2 de réception de messages obtenus en réponse à une telle demande (messages HO REJ, HO COMM), ainsi que les moyens 4 de réception de messages de demande de transfert (messages HO REQ'), et les moyens 5 d'émission, soit de message d'accusé de réception de requête de "handover" (message HO REQ ACK), soit de message indiquant une impossibilité d'effectuer un transfert vers une cellule cible (message HO FAIL), de même que les moyens 3 de gestion de ressources radio (pour ce qui est de leurs fonctions autres que celles se rapportant à la présente invention), peuvent être des moyens classiques, qui ne nécessitent donc pas d'être redécrits ici.

La réalisation particulière des moyens 4 pour émettre une information INF quant à des cellules précédemment rejetées, des moyens 7 pour recevoir une information correspondante INF', et des fonctions particulières des moyens 3 de gestion de ressources radio se rapportant à la présente invention, de manière à faire fonctionner l'ensemble selon le procédé ainsi décrit dans cet exemple, ne présentant pas de difficulté particulière pour l'homme du métier, ne nécessitent pas non plus de description spécifique.

On comprendra en outre que l'invention n'est pas limitée aux exemples décrits, et qu'elle permet d'une manière générale d'améliorer la coopération entre entités d'un réseau cellulaire de radiocommunications mobiles, dans le cas de transferts de communication inter-cellulaires dits externes.

## Revendications

1. Procédé de coopération entre entités d'un réseau cellulaire de radiocommunications mobiles, lors de transferts de communications inter-cellulaires, au cours desquels une cellule dite nouvelle cellule serveuse, est choisie, parmi un ensemble de cellules dites cellules candidates, comme étant une cellule candidate vers laquelle un transfert demandé s'avère possible, des cellules candidates vers lesquelles un transfert demandé ne s'avère pas possible étant au contraire dites cellules rejetées, ce procédé étant caractérisé en ce que, lors d'un transfert de communication dit externe, à savoir d'une cellule dite cellule serveuse actuelle (Ci) contrôlée par une entité de contrôle dite entité serveuse actuelle (BSCi), vers une nouvelle cellule serveuse (BSCj) contrôlée par une entité de contrôle distincte de ladite entité serveuse actuelle et dite nouvelle entité serveuse (BSCj), ladite nouvelle entité serveuse (BSCj) est informée de cellules précédemment rejetées (Ck).

2. Procédé selon la revendication 1, caractérisé en ce que ladite information quant à des cellules précédemment rejetées comporte en outre une indication quant à la raison du rejet de ces cellules, ou quant à une durée au bout de laquelle un transfert peut, le cas échéant, de nouveau être demandé vers ces cellules.

3. Procédé selon l'une des revendications 1 et 2, caractérisé en ce que, une cellule candidate vers laquelle un transfert est demandé étant dite cellule cible, l'entité de contrôle d'une cellule cible étant dite entité cible (BSCc), et chaque entité cible étant susceptible de devenir ladite nouvelle entité serveuse si le transfert demandé vers cette cellule cible s'avère possible, chaque entité cible est informée, au cours d'une demande de transfert vers cette cellule cible, de cellules précédemment rejetées.

4. Procédé selon la revendication 3, caractérisé en ce que ladite information quant à des cellules précédemment rejetées est transmise par l'entité serveuse actuelle (BSCs) à l'entité cible (BSCc) via une entité du réseau dite de niveau supérieur (MSC), assurant la liaison entre cette entité serveuse et cette entité cible.

5. Entité (BSC) de contrôle de cellules pour réseau cellulaire de radiocommunications mobiles, pour la mise en oeuvre du procédé suivant l'une des revendications 1 à 4, caractérisée en ce qu'elle comporte:
- pour le cas de cellule contrôlée constituée par une nouvelle cellule serveuse, des moyens pour recevoir une information quant à des cellules précédemment rejetées.

6. Entité selon la revendication 5, pour la mise en oeuvre du procédé selon l'une des revendications 3 et 4, caractérisée en ce qu'elle comporte:
- pour le cas de cellule contrôlée constituée par une cellule serveuse, des moyens (4) d'émission d'une information (INF) quant à des cellules précédemment rejetées,
- pour le cas de cellule contrôlée constituée par une cellule cible, des moyens (7) de réception d'une information (INF') quant à des cellules précédemment rejetées.
- pour le cas de cellule contrôlée constituée par une cellule successivement cible et serveuse, des moyens (3) pour interdire l'émission de demandes de transfert vers des cellules précédemment rejetées.

7. Entité selon la revendication 6, pour la mise en oeuvre du procédé suivant la revendication 2, caractérisée en ce qu'elle comporte en outre:
- pour le cas de cellule contrôlée constituée par une cellule successivement cible et serveuse, des moyens (3) pour autoriser l'émission d'une demande de transfert vers une cellule précédemment rejetée, au bout de ladite durée, ou d'une durée fonction de la raison du rejet de cette cellule.
